Europäisches Patentamt

(19) European Patent Office

Office européen des brevets

(11) Numéro de publication : **0 109 912**
**B1**

(12) **FASCICULE DE BREVET EUROPÉEN**

(45) Date de publication du fascicule du brevet :
**06.05.87**

(21) Numéro de dépôt : **83430037.8**

(22) Date de dépôt : **21.11.83**

(51) Int. Cl.⁴ : **A 01 G   3/03**, F 15 B  11/15

(54) **Outils hydrauliques portatifs, par exemple sécateurs hydrauliques, et procédé de rappel du piston de leur vérin.**

(30) Priorité : **22.11.82 FR 8219629**

(43) Date de publication de la demande :
**30.05.84 Bulletin 84/22**

(45) Mention de la délivrance du brevet :
**06.05.87 Bulletin 87/19**

(84) Etats contractants désignés :
**AT BE CH DE FR GB IT LI NL SE**

(56) Documents cités :
**FR-A- 2 401 604**
**US-A- 3 330 037**

(73) Titulaire : **ETABLISSEMENTS PELLENC ET MOTTE**
**(Société à responsabilité limitée)**
**Quartier Notre-Dame Route de Villelaure**
**F-84120 Pertuis (FR)**

(72) Inventeur : **Pellenc, Roger Joseph Pierre**
**Quartier de la Piscine**
**F-84120 Pertuis (FR)**

(74) Mandataire : **Marek, Pierre**
**32, rue de la Loge**
**F-13002 Marseille (FR)**

EP 0 109 912 B1

Jouve, 18, rue St-Denis, 75001 Paris, France

## Description

La présente invention concerne les outils hydrauliques portatifs tels que, par exemple, les sécateurs ou cisailles hydrauliques comportant un corps évidé à l'avant duquel sont installées deux lames dont au moins une lame pivotante actionnée par un dispositif hydraulique comprenant : d'une part, un vérin à simple effet comportant un piston d'entraînement dont la tige est assujettie à ladite lame pivotante et, d'autre part, un distributeur hydraulique permettant d'envoyer le fluide hydraulique sous pression contre la face de travail dudit piston afin d'en assurer le déplacement dans le sens correspondant à la fermeture des lames. L'invention concerne également le procédé de rappel du piston du vérin desdits outils hydrauliques portatifs. Les outils hydrauliques portatifs connus, par exemple les sécateurs hydrauliques comprennent généralement un vérin à simple effet ou un vérin à double effet. Dans le premier cas (FR-A-2 336 072), le fluide hydraulique sous pression provenant d'une source de fluide hydraulique sous pression (pompe, circuit hydraulique d'un tracteur, d'une plateforme automotrice ou autres véhicules, groupe hydraulique adaptable sur motoculteur, groupe hydro-électrique, etc.) est appliqué sur une seule face ou face de travail du piston du vérin dont le retour est assuré au moyen d'un ressort de compression logé dans une chambre de rappel de volume variable lequel décroît lorsque le piston d'entraînement se déplace sous la poussée du fluide hydraulique sous pression permettant ainsi de comprimer ledit ressort dont la détente provoque ainsi le retour dudit piston. La présence de ce dernier engendre un certain nombre d'inconvénients parmi lesquels on souligne notamment :

un retour du piston à vitesse non réglable ;

une cassure fréquente de ce ressort ;

une augmentation du diamètre des appareils due à la nécessité de prévoir une chambre annulaire de dimension radiale importante entre la périphérie de la tige du piston et la paroi de l'alésage dans lequel sont montés ce dernier et ladite tige ;

un alourdissement des appareils.

En raison de ces inconvénients, on préfère souvent équiper les outils hydrauliques avec un vérin à double effet dont le piston comporte deux faces de travail opposées, ou avec un vérin différentiel dont le piston comporte également deux faces de travail opposées de surfaces inégales (FR-A-2 367 422). Toutefois, dans ce cas, la construction des appareils se trouve compliquée par la nécessité de prévoir deux conduits distincts pour amener le fluide hydraulique sous pression provenant de la source de fluide hydraulique sous pression alternativement contre l'une ou l'autre desdites faces de travail, ainsi qu'un distributeur à double effet relativement complexe pour régler la circulation de l'huile dans ces conduits et en direction du retour. D'autre part, la quantité d'huile utilisée pour chaque course aller-retour du piston, est nettement supérieure à celle qui est demandée par un vérin à simple effet, ce qui engendre une baisse du rendement du sécateur ou autre outil hydraulique. En outre, les outils équipés d'un vérin différentiel ne peuvent fonctionner qu'en circuit hydraulique à centre fermé. Enfin, cet agencement complexe des outils conduit aussi à un dimensionnement important et à un alourdissement de ces derniers qui, dans le cas des sécateurs destinés aux travaux agricoles de taille ou de récolte, influent de manière défavorable sur leur maniabilité et sur la précision desdits travaux et sont, en outre, des facteurs de fatigue des utilisateurs.

Un but visé par la présente invention est de remédier aux inconvénients susmentionnés des outils hydrauliques portatifs connus tels que, par exemple, les sécateurs ou cisailles hydrauliques, comportant un vérin à simple effet ou à double effet.

Selon l'invention, cet objectif est atteint grâce à un agencement et à un procédé suivant lesquels les appareils sont équipés d'un vérin à simple effet comprenant un piston dont le rappel est assuré par la détente d'un fluide compressible tel que, par exemple, un fluide gazeux, comprimé et renfermé dans une chambre de rappel à volume variable, rendue étanche, ledit fluide compressible étant soumis à une compression supplémentaire lors du déplacement dudit piston sous la poussée du fluide hydraulique sous pression provenant de la source hydraulique sous pression.

Cet agencement et ce procédé permettent la réalisation d'appareils et d'outils hydrauliques portatifs divers tels que, par exemple, des sécateurs hydrauliques, d'une grande simplicité constructive découlant notamment de la possibilité d'utiliser un distributeur à simple effet et de la présence d'un seul conduit reliant ce distributeur à la chambre délimitée par la face de travail du piston d'entraînement. Cette grande simplicité a pour corollaire un fonctionnement sûr et durable des appareils ou outils. D'autre part, ces derniers peuvent être exécutés avec des diamètres réduits et une légèreté accrue par rapport aux appareils et outils du même genre connus. Un autre avantage de l'agencement et du procédé selon l'invention est qu'ils autorisent une réalisation très simple du distributeur dont les joints d'étanchéité ne supportent aucune pression élevée, de sorte qu'ils ne sont soumis à aucune force importante de déformation ou d'extrusion, tandis que l'on obtient un équilibrage parfait de l'organe mobile dudit distributeur. D'autre part, les outils peuvent fonctionner aussi bien en circuit hydraulique à centre ouvert qu'en circuit hydraulique à centre fermé. Un autre avantage de l'invention réside dans la possibilité de régler la vitesse de retour du piston d'entraînement et, par conséquent, la vitesse de ré-ouverture des lames, ce qui permet de les refermer avant leur complète ouverture.

Dans l'application avantageuse aux sécateurs, cette possibilité facilite le travail de taille ou de récolte, en raison du fait qu'elle favorise la pénétration de la tête de coupe de ces derniers dans la végétation.

Ces buts, caractéristiques et avantages, et d'autres encore, ressortiront mieux de la description qui suit et des dessins annexés dans lesquels :

La figure 1 est une vue partielle, en coupe axiale, d'un premier exemple d'exécution d'un sécateur hydraulique réalisé selon l'invention, dont les différents organes mobiles sont représentés dans une position correspondant à l'ouverture des lames.

La figure 2 est une vue partielle, en coupe axiale, de la partie avant équipée de la tête de coupe de ce sécateur.

Les figures 3 et 4 sont des vues partielles, en coupe axiale et à plus grande échelle, de la partie avant équipée du vérin à simple effet et de la partie arrière dans laquelle est installé le distributeur hydraulique, respectivement, représentées dans des positions correspondant à l'ouverture des lames.

Les figures 5 et 6 sont des vues analogues aux figures 3 et 4, respectivement, illustrant lesdites parties avant et arrière dans des positions correspondant à la fermeture des lames.

La figure 7 est une vue de face, avec coupe partielle, de la tête de coupe perfectionnée de ce sécateur.

La figure 8 est, à plus grande échelle, une vue en coupe axiale du distributeur hydraulique à simple effet dudit sécateur.

La figure 9 est une vue en coupe axiale d'un autre mode d'exécution d'un sécateur hydraulique réalisé selon l'invention, dont les lames n'ont été représentées que partiellement et dont les différents organes mobiles sont illustrés dans des positions correspondant à l'ouverture desdites lames.

Les figures 10 et 11 sont des vues partielles, en coupe axiale et à plus grande échelle, de la partie avant équipée du vérin à simple effet et de la partie arrière dans laquelle est installé le distributeur hydraulique, respectivement, représentées dans la position d'ouverture des lames.

Les figures 12 et 13 sont des vues analogues aux figures 10 et 11, respectivement, illustrant lesdites parties avant et arrière dans des positions correspondant à la fermeture des lames.

La figure 14 est une vue en coupe axiale d'un autre mode d'exécution d'un sécateur hyraulique analogue à celui qui est illustré aux figures 1 à 8 et dont seul l'outil de coupe proprement dit est représenté, les différents organes mobiles de cet outil étant montrés dans des positions correspondant à la fermeture de ses lames de coupe.

La figure 15 est une vue en coupe axiale de cet outil de coupe dont les organes mobiles sont montrés dans des positions correspondant à l'ouverture de ses lames.

La figure 16 est une vue partielle, en coupe axiale et à plus grande échelle de la figure 14.

On se réfère auxdits dessins pour décrire des exemples intéressants, quoique nullement limitatifs, de mise en œuvre du procédé et de réalisation des outils portatifs hydrauliques selon l'invention.

On se reporte, dans l'exposé qui suit, à une application particulièrement intéressante de l'invention à la réalisation de sécateurs hydrauliques utilisables pour travaux de taille ou de récolte, en agriculture, arboriculture, viticulture ou horticulture. Toutefois, on souligne que l'invention peut être appliquée à la réalisation d'appareils ou outils hydrauliques portatifs divers, tels que, par exemple, cisailles pour découper les tôles des caisses de véhicules accidentés, pinces de serrage hydrauliques, etc.

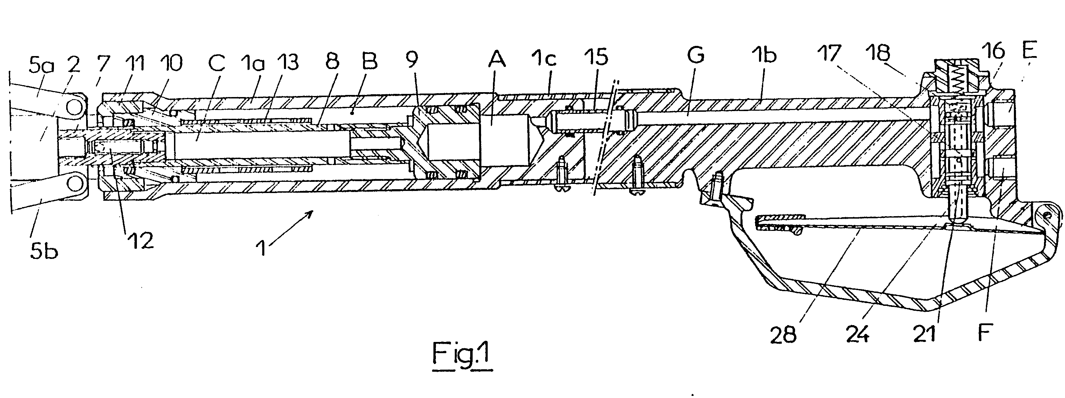

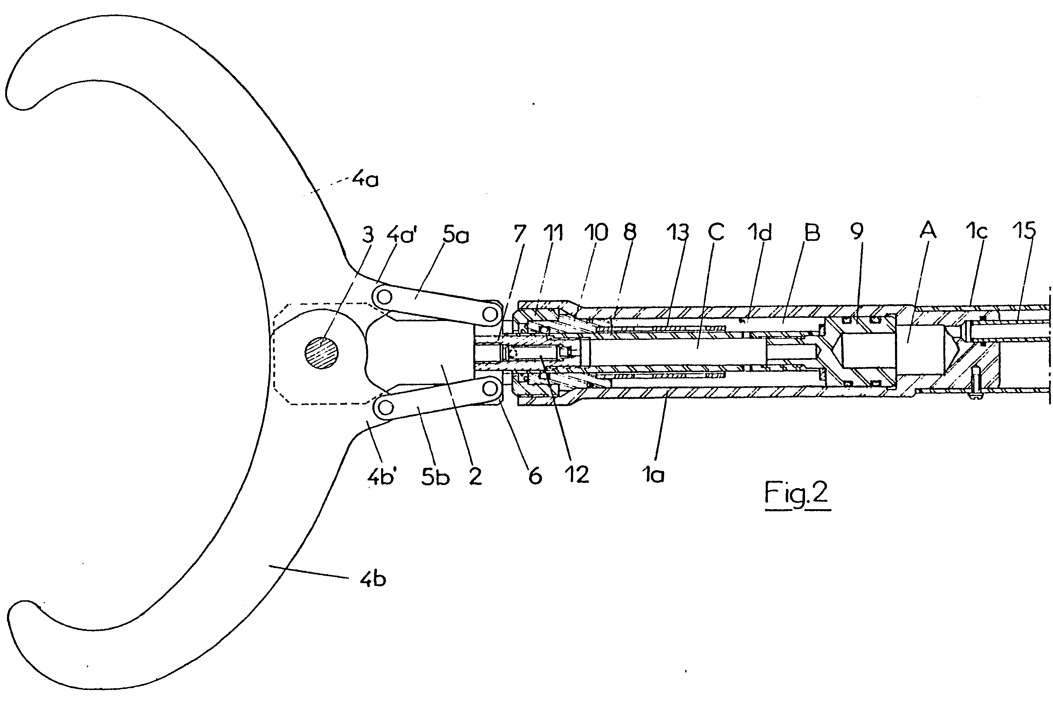

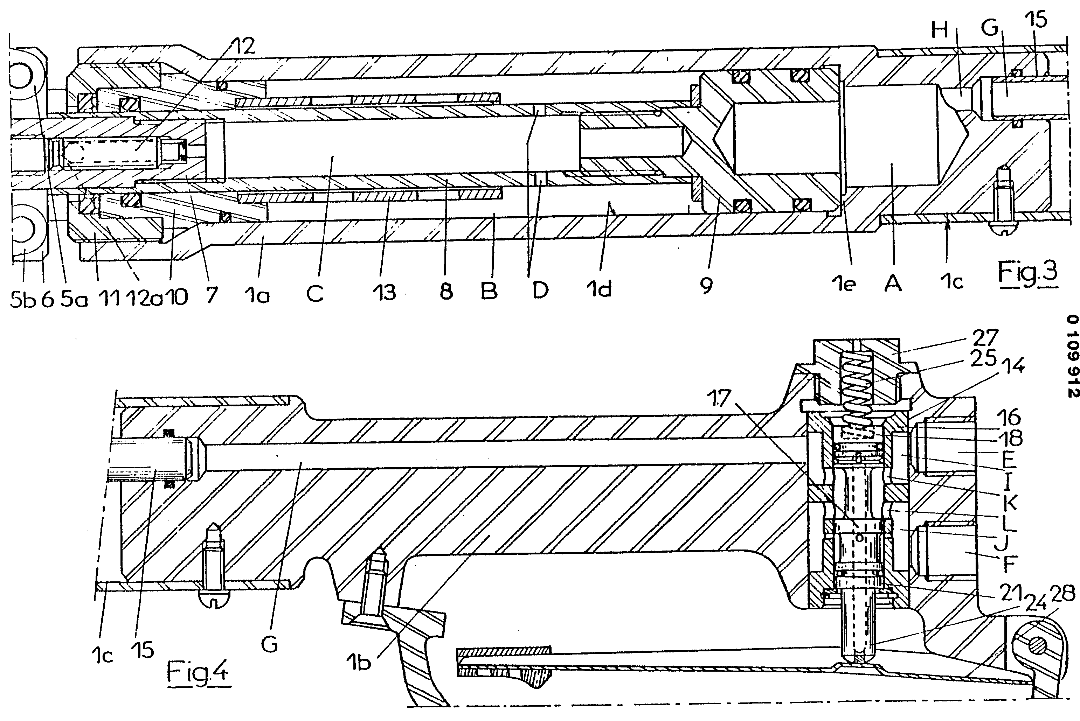

Les figures 1 à 6 illustrent un exemple de mise en œuvre simplifiée de l'invention appliquée à la réalisation d'un sécateur hydraulique pourvu de deux lames mobiles et d'un corps de longueur relativement importante, un tel outil convenant plus particulièrement à la taille et à la récolte des fruits des palmiers tels que palmiers-dattiers, palmiers à huile, etc.

Ce sécateur comprend un corps désigné dans son ensemble par la référence 1 et composé d'un boîtier avant 1a, d'un boîtier arrière 1b et d'une allonge tubulaire 1c exécutée en une ou plusieurs parties et reliant l'extrémité postérieure dudit boîtier avant et l'extrémité antérieure dudit boîtier arrière.

Sur l'extrémité antérieure du boîtier avant, est installée une tête de coupe comportant un porte-lames 2 en forme de chape sur lequel sont articulées, au moyen d'un axe 3, deux lames 4a, 4b. Ces dernières comportent, à distance de l'axe 3, une protubérance 4a', 4b' sur laquelle est articulée l'une des extrémités d'un couple de biellettes 5a, 5b également articulé, par son extrémité opposée, sur une potence 6 rigidement solidaire d'un bouchon 7 lui-même fixé, par exemple par vissage et de manière étanche, dans l'extrémité avant de la tige creuse 8 d'un piston d'entraînement 9. Ce piston équipé de joints périphériques d'étanchéité, est logé, avec une aptitude de coulissement étanche, dans l'évidement axial du boîtier avant 1a et, plus précisément, dans un alésage 1d formé dans la portion médiane de ce dernier. La tige 8 du piston 9 coulisse, de manière étanche, dans un guide 10 positionné, également de façon étanche, dans l'extrémité antérieure du boîtier avant 1a, ce guide muni de joints d'étanchéité annulaires périphériques et intérieurs étant maintenu en position par une bague 11 vissée dans ladite extrémité antérieure, et avantageusement constituée par l'extrémité postérieure du porte-lame 2.

Le piston 9 délimite, par ses faces opposées :

d'une part, une chambre A communiquant en permanence avec l'arrivée du fluide hydraulique provenant de la source de fluide hydraulique et susceptible d'être mise en relation avec le retour dudit fluide ;

d'une part, une chambre annulaire de rappel B de volume variable, renfermant ou apte à renfermer un fluide compressible comprimé et, de préférence, un fluide gazeux comprimé, en entourant la tige de piston 8, cette chambre étant rendue étanche au moyen du guide 10.

La chambre B communique avec une chambre-réservoir C constituée par l'évidement axial de la tige de piston 8, par l'intermédiaire de trous radiaux D ménagés dans ladite tige. La chambre B est ainsi disposée autour de la chambre C et ces deux chambres coaxiales permettent de disposer en permanence d'un important volume disponible pour le logement du fluide gazeux comprimé, sans allongement des outils, ce qui évite une compression trop importante dudit fluide gazeux, lors des mouvements d'avance du piston 9. L'entrée de la chambre C est équipée d'un obturateur constitué par une valve 12 à clapet 12a, de type connu en soi, et installée dans un évidement axial du bouchon 7 assurant la fermeture étanche de ladite chambre, dans sa partie avant. Un organe de butée limite la longueur de la course du piston d'entraînement 9 vers l'avant laquelle détermine l'amplitude du pivotement des lames. Cet organe de butée peut être avantageusement constitué par un manchon ajouré 13 logé dans l'évidement axial du boîtier avant et disposé autour de la tige 8, ce manchon étant solidaire, par l'une de ses extrémités, du guide 10. Un épaulement circulaire 1e ménagé dans le boîtier avant sert de butée contre laquelle vient en appui la face de travail du piston, en fin de course de retour.

Le distributeur hydraulique commandant les déplacements du piston 9 est installé dans un évidement transversal 14 que présente le boîtier arrière 1b constituant la partie postérieure du corps du sécateur.

Dans cet évidement d'axe perpendiculaire à l'axe du piston 9, débouchent :

l'orifice d'alimentation ou arrivée du fluide E ménagé à la partie postérieure du boîtier arrière 1b et agencé pour pouvoir être raccordé, de toute manière connue, à une tuyauterie souple (non représentée) elle-même reliée à une source de fluide hydraulique ;

l'orifice de retour F, par exemple disposé au-dessous du précédent et également agencé pour pouvoir être raccordé à une tuyauterie souple de retour (non illustrée) ;

un canal longitudinal G communiquant avec la chambre A délimitée par la face de travail du piston 9 ; ce canal longitudinal est, suivant le mode d'exécution illustré, constitué par un perçage ménagé dans le boîtier arrière 1b et par un tuyau de jonction 15 rigide ou souple, reliant, de manière étanche, l'extrémité avant dudit perçage et un orifice H dont est pourvue la portion postérieure du boîtier avant 1a et débouchant dans la chambre A.

Le distributeur comprend une chemise cylindrique 16 dotée de deux larges gorges annulaires périphériques I, J.

La gorge I communique en permanence avec l'orifice d'alimentation E et avec le canal G. Elle communique également avec l'alésage de la chemise 16, par l'intermédiaire de trous radiaux K ménagés dans cette dernière.

La gorge J communique constamment avec le retour F et, suivant la position du tiroir de distribution décrit ci-après, avec l'alésage de la chemise 16, d'une part, grâce à des trous radiaux L et, d'autre part, par l'intermédiaire d'orifices radiaux M de diamètre plus réduit et disposés en avant desdits trous radiaux, par rapport à l'extrémité interne de ladite chemise.

Dans l'alésage de la chemise 16 est monté, avec une latitude de coulissement, l'organe mobile du distributeur lequel est avantageusement exécuté en une seule pièce et comprend un tiroir de distribution 17 délimitant, à l'intérieur dudit alésage, deux chambres annulaires N, O. La chambre de distribution N est en communication constante avec l'arrivée E, par le passage K-I, et avec le canal G, également par le passage K-I, ladite chambre communiquant donc aussi en permanence avec la chambre A délimitée par la face de travail du piston d'entraînement 9. Suivant la position du tiroir de distribution 17, elle communique ou non avec le retour F, par le passage L-J. La chambre N est également délimitée par un piston d'équilibre 18 constituant l'extrémité interne de l'organe mobile du distributeur. Ce piston d'équilibre comporte deux gorges périphériques 18a, 18b. Dans la gorge 18a la plus proche de son extrémité externe, est logé un joint d'étanchéité annulaire 19, tandis que la gorge 18b la plus proche de la chambre N communique avec un canal P ménagé axialement à l'intérieur de la tige 20 dudit organe mobile, par l'intermédiaire d'au moins un trou radial Q. D'autre part, le canal P communique avec la chambre O, par l'intermédiaire d'au moins un orifice radial R, ladite chambre étant constamment en relation avec le retour F, par le passage M-J.

La chambre d'évacuation O est également délimitée par un obturateur cylindrique 21 constitué par un bossage circulaire que présente la tige 20 au voisinage de sa portion externe et comportant une gorge périphérique 21a dans laquelle est logé un joint d'étanchéité annulaire 22.

En position de repos, l'obturateur cylindrique 21 se trouve en appui contre une rondelle d'arrêt 23a immobilisée par un circlips 23 installé dans une gorge circulaire ménagée à l'entrée de la chemise 16 d'où émerge l'extrémité externe 24 formant gâchette de la tige 20. Cette dernière est soumise à l'action d'un ressort de compression 25 placé en appui, par ses extrémités opposées, d'une part, contre le fond d'un logement borgne 26 ménagé dans le fond de ladite tige et, d'autre part, contre le fond d'un bouchon 27 vissé dans l'extrémité taraudée de l'évidement 14 opposée à l'extrémité d'où émerge la gâchette 24, ledit ressort tendant à repousser cette dernière en position émergente.

Sur la partie postérieure du boîtier arrière 1b, est articulé le levier de manœuvre 28 du sécateur, prenant appui contre la gâchette 24 et dont le pivotement vers l'intérieur permet de repousser cette dernière à l'encontre de l'action antagoniste exercée par le ressort 25.

On comprend aisément le fonctionnement de ce sécateur. Par l'intermédiaire de la valve 12 et à l'aide de tout matériel adéquat (compresseur, bouteille de gaz comprimé, pompe à main, etc.), un fluide compressible est introduit et comprimé dans les chambres coaxiales C et B, ce qui a pour effet de repousser le piston 9 vers l'arrière et de le maintenir calé contre l'épaulement 1e. Le fluide compressible utilisable est avantageusement un fluide gazeux, par exemple de l'air comprimé ou, de préférence, un gaz neutre comprimé ne se dissolvant pas ou peu dans l'huile tel qu'azote, argon, etc.

En position de repos correspondant à l'ouverture des lames (figures 1 à 4 et 8), l'arrivée E du fluide hydraulique communique avec le retour F, par l'intermédiaire du passage I-K-N-L-J (fonctionnement en circuit hydraulique à centre ouvert). Le fluide hydraulique tel qu'huile, remplit également le canal G et la chambre A qui, dans cette situation, présente son volume minimum, en raison de la position reculée du piston 9.

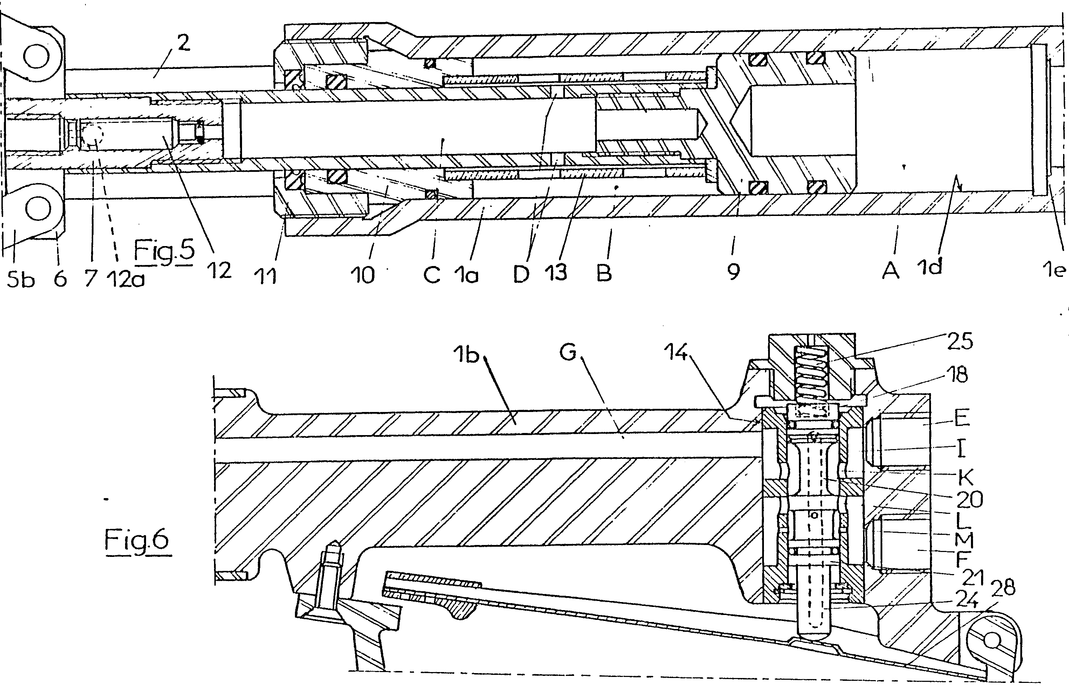

Lorsqu'on repousse l'organe mobile 17-18-20-21 du distributeur, au moyen de levier 28 agissant sur la gâchette 24, la nouvelle position du tiroir de distribution 17 dudit organe mobile empêche la circulation de l'huile à travers les trous radiaux L et interrompt donc la communication entre l'arrivée et le retour. La pression de l'huile s'exerçant contre la face de travail du piston 9 étant alors plus importante que celle du gaz comprimé renfermé dans les chambres B et C et s'appliquant sur la face opposée dudit piston, ce dernier est repoussé vers l'avant (figures 5 et 6), ce qui entraîne le pivotement et la fermeture des lames. On observe que, dans cette position, la pression de l'huile ne s'applique pas sur les joints 19 et 22 qui équipent l'organe mobile du distributeur. En effet, l'étanchéité entre : — d'une part, les surfaces cylindriques des portions du piston d'équilibre 18 et de l'obturateur 21 disposées du côté intérieur des joints 19 et 22, respectivement, et, — d'autre part, l'alésage de la chemise 16, et principalement obtenue par la qualité des ajustements des surfaces cylindriques en contact, de sorte que lesdits joints ne supportent aucune pression. Toutefois, s'il se produit une fuite d'huile autour du piston d'équilibre 18, cette huile est collectée dans la gorge 18b et, par l'intermédiaire du passage Q-P-R-O-M-J, elle est acheminée jusqu'au retour F. Le joint 19 équipant le piston d'équilibre ne supporte donc aucune pression. D'autre part, le joint 22 dont est muni l'obturateur cylindrique 21 n'est quant à lui, soumis à aucune pression, car la chambre O délimitée par ledit obturateur communique en permanence avec le retour. Il est donc possible d'utiliser des pressions très importantes, compte tenu du fait que les joints ne subissent aucune déformation, quelle que soit la position de l'organe mobile du distributeur. Lorsqu'on relâche le levier 28, l'organe mobile du distributeur est repoussé par le ressort 25. de sorte que le tiroir de distribution 17 occupe une position permettant le passage de l'huile à travers les trous radiaux L, ce qui rétablit la communication entre l'arrivée E et le retour F. La pression baisse dans la chambre A et devient inférieure à celle qui est présente dans les chambres B et C. de sorte que le piston 9 se trouve repoussé vers l'arrière par la détente du gaz comprimé contenu dans ces dernières et précédemment soumis à une compression complémentaire lors du déplacement vers l'avant dudit piston, ce qui entraîne le pivotement et la réouverture des lames. La vitesse de recul du piston et donc la vitesse du pivotement des lames en position d'ouverture, sont liées à la valeur de la compression du gaz comprimé renfermé dans les chambres B et C. On comprend que, par le choix du taux de compression de ce gaz, il est possible de régler aisément et commodément la vitesse de la réouverture des lames.

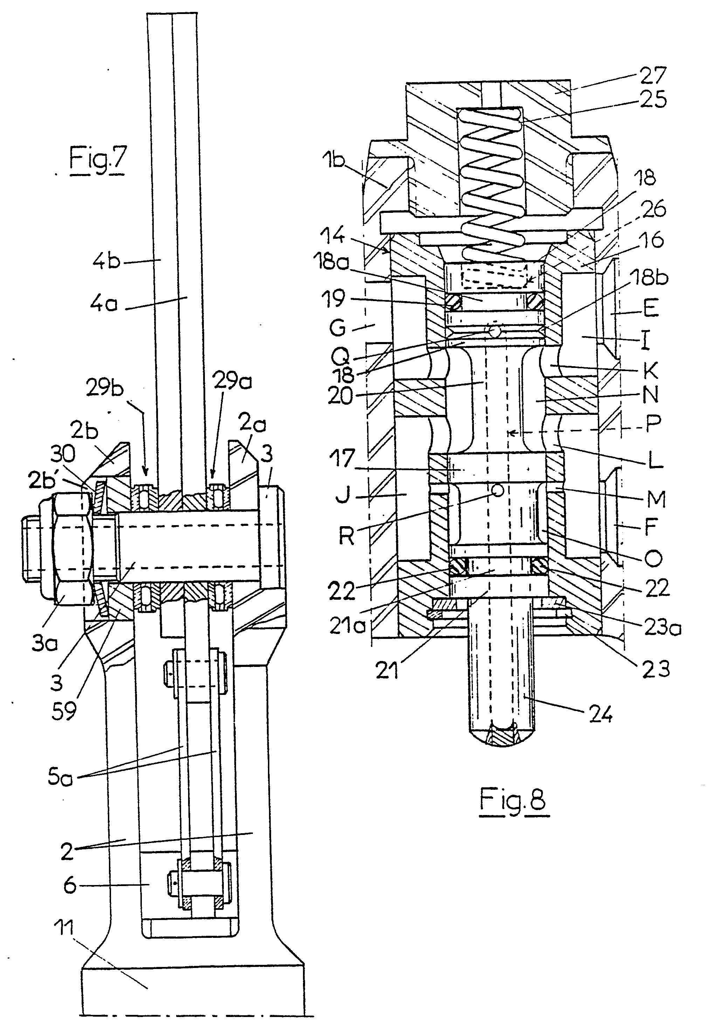

On a illustré, à la figure 7, un agencement très avantageux de la tête de coupe du sécateur. Selon ce mode d'exécution, une butée à bille 29a, 29b est installée sur l'axe 3, de chaque côté du couple de lames 4a, 4b, entre les branches 2a, 2b de la chape constituant la portion antérieure du porte-lames 2. L'axe 3 est constitué par un boulon permettant de maintenir les lames 4a, 4b en contact l'une avec l'autre. Afin que la pression tendant à plaquer lesdites lames l'une contre l'autre soit toujours suffisante pour obtenir une coupe nette, sans toutefois contrarier le pivotement de la ou des lames mobiles, cette pression est appliquée au couple de lames par l'intermédiaire d'un organe élastique. De manière avantageuse et préférée, cet organe élastique est constitué par une rondelle Belleville 30, par exemple interposée entre la face interne de l'écrou 3a du boulon 3 et une bague 59 montée avec une aptitude de translation axiale sur la tige dudit boulon, dans un logement 2b' de l'une des branches (branche 2b) du porte-lames, cette bague mobile étant elle-même interposée entre ladite rondelle Belleville et l'une des butées à billes (butée à billes 29b).

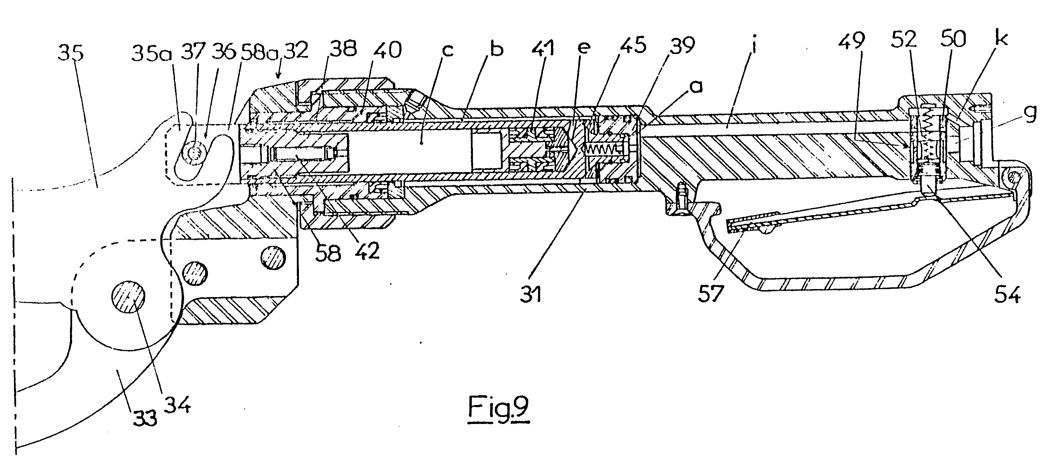

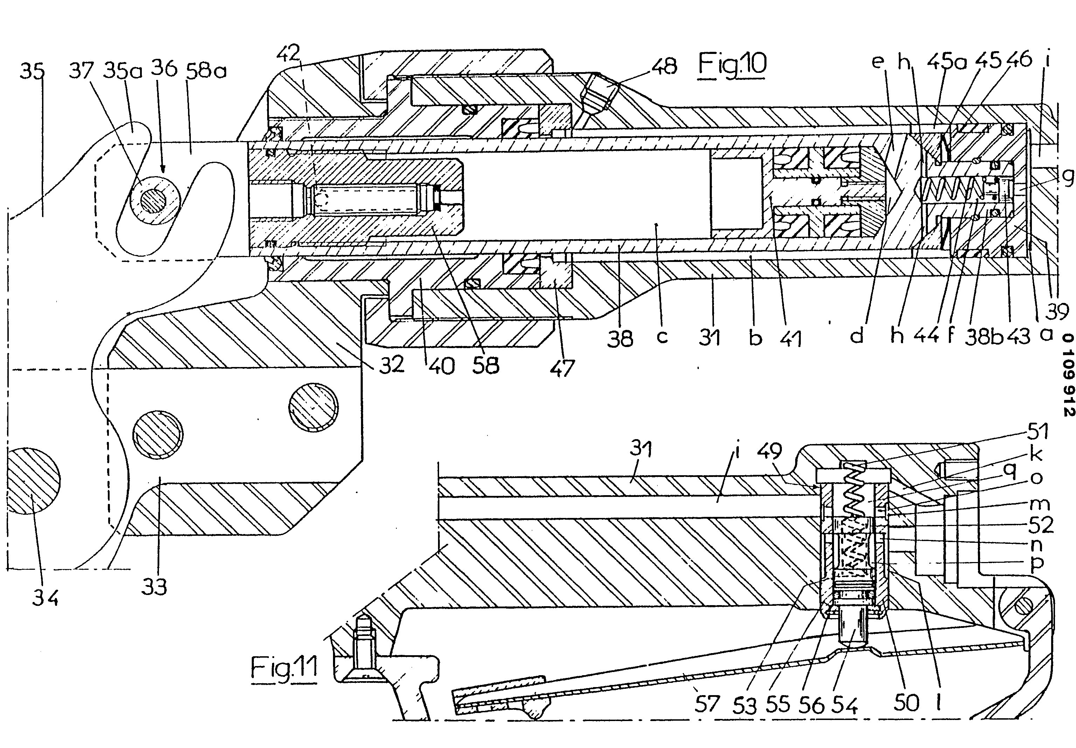

Les figures 9 à 13 illustrent un second exemple de mise en œuvre de l'invention appliquée à la réalisation d'un autre type de sécateur hydraulique convenant aux travaux classiques de taille et de récolte en arboriculture, viticulture et horticulture. Ce sécateur comprend un corps évidé 31 dont la portion arrière est conformée pour servir de poignée et sur la partie antérieure duquel est installée une tête de coupe comportant un porte-lames 32 sur lequel est fixé un crochet ou lame fixe 33. Sur ce crochet, est articulée, au moyen d'un axe 34, la lame mobile 35 de ladite tête de coupe. Cette lame mobile comporte un prolongement ou levier 35a présentant une fente ouverte 36 traversée par un coulisseau d'entraînement 37 porté par l'extrémité antérieure en forme de chape 58a d'un bouchon 58 installé de manière étanche dans l'extrémité avant d'une tige alésée 38. Lors des pivotements de la lame mobile 35, le coulisseau d'entraînement 37 glisse dans la fente 36. Cette disposition facilite la liaison de la lame mobile et de la tige. en supprimant l'emploi d'un organe intermédiaire. Sur l'extrémité postérieure cylindrique 38b de diamètre plus réduit de la tige 38, est calé un piston d'entraînement 39 muni de joints annulaires périphériques d'étanchéité et logé, avec une aptitude de coulissement étanche, dans un alésage de la portion avant du corps 31. La face de travail de ce piston délimite une chambre a de volume variable, tandis que sa face opposée délimite une chambre annulaire de volume variable b entourant la tige 38. Cette dernière peut coulisser, de manière étanche, dans un guide 40 fixé, de préférence de façon démontable, dans la partie avant de l'évidement du corps 31, ce guide étant pourvu, intérieurement et extérieurement, de joints annulaires d'étanchéité.

Dans l'alésage de la tige 38, est logé un piston libre 41 équipé de joints annulaires périphériques d'étanchéité. Ce piston libre délimite, à l'intérieur dudit alésage, d'une part, par sa face avant, une chambre c et, d'autre part, par sa face arrière, une seconde chambre d laquelle communique constamment avec la chambre annulaire b, par l'intermédiaire d'au moins un orifice e ménagé dans la paroi cylindrique de la tige 38. Les chambres concentriques b et d constituent, avec l'orifice e les faisant communiquer, une enceinte à capacité variable destinée à contenir un fluide incompressible de tranmission, comme on l'explique ci-après.

Une valve 42 est installée à l'avant de la tige 38, dans un évidement axial du bouchon 58, à l'entrée de la chambre c, cette valve permettant d'introduire un fluide compressible tel qu'air, azote, argon, etc., dans ladite chambre rendue étanche au moyen dudit bouchon.

L'extrémité postérieure de la tige 38 comporte en alésage axial f disposé en alignement avec un orifice axial g ménagé dans le piston 39 et communiquant avec la chambre a. Dans l'alésage f, est logé un clapet anti-retour 43 et un ressort de compression 44 tendant à maintenir ledit clapet contre le bord avant de l'orifice g. Dans l'alésage f, débouchent deux perçages radiaux h s'ouvrant dans la surface latérale d'une portion tronconique 38c que présente la tige 38 en avant de son extrémité postérieure cylindrique de diamètre réduit engagée dans le piston 39, c'est-à-dire à proximité immédiate et en avant de ce dernier. Cette surface conique sert de siège à un clapet annulaire 45 présentant une surface d'appui conique complémentaire. Ce clapet 45 est pourvu de rainures périphériques 45a orientées parallèlement à son axe, et il est maintenu sur son siège par un moyen élastique avantageusement constitué par une rondelle Belleville 46 interposée entre sa face postérieure et la face avant du piston 39.

A l'extrémité avant de la chambre annulaire b, est positionnée fixement une bague de butée 47 ayant une double foncion : — d'une part, limiter la course du piston 39 vers l'avant et, — d'autre part, soulever le clapet 45 de son siège lorsque ledit piston arrive en fin de course d'avancement.

Un orifice de purge 48 communiquant avec l'extrémité antérieure de la chambre annulaire b, est prévu dans le corps 31, cet orifice étant équipé d'un organe d'obturation étanche.

Le distributeur hydraulique est installé dans un évidement borgne transversal 49 ménagé dans la partie arrière du corps 31. Un conduit i, constitué par un perçage longitudinal exécuté dans la partie arrière du corps, établit une communication entre la chambre a délimitée par la face de travail du piston d'entraînement 39 et l'évidement transversal borgne 49 dans lequel débouchent encore :

d'une part, l'orifice d'alimentation ou arrivée j du fluide hydraulique sous pression ;

d'autre part, l'orifice de retour k.

Suivant l'exemple illustré, l'extrémité postérieure du corps 31 est agencée pour recevoir un dispositif (non représenté) permettant l'accouplement démontable, commode et rapide, du sécateur à des flexibles coaxiaux d'alimentation et de retour reliés à une source de fluide hydraulique sous pression, un tel dispositif d'accouplement démontable étant décrit dans le document FR-A-2 419 453. Le distributeur comprend une chemise cylindrique 50 installée fixement dans l'évidement 49, un organe mobile de distribution monté avec une aptitude de coulissement dans l'alésage axial de ladite chemise, et un ressort de compression 51 interposé entre le fond dudit évidement et le fond d'une cavité axiale ménagée dans la portion interne dudit organe.

La chemise cylindrique 50 comporte deux gorges annulaires périphériques l, m. La gorge l communique en permanence avec l'arrivée j, et également avec l'alésage q de la chemise par l'intermédiaire de trous radiaux n dont l'entrée est placée dans la partie arrière de ladite gorge, par rapport à l'extrémité externe de ladite chemise. La gorge m communique directement avec le conduit i, et aussi avec l'alésage q de la chemise, par l'intermédiaire de trous radiaux o disposés en arrière des trous n.

L'organe mobile du distributeur est avantageusement exécuté en une seule pièce et comprend un tiroir de distribution 52 délimitant, avec un piston d'équilibre 53, une chambre annulaire p laquelle est en relation constante avec l'arrivée j, par le passage n-l. Ledit organe mobile comprend encore une gâchette ou poussoir 54 constituée par l'une de ses extrémités émergeant de l'entrée de la chemise, et il est maintenu à l'intérieur de cette dernière au moyen d'une rondelle d'arrêt 55 immobilisée par un circlips 56 positionné dans une rainure circulaire interne ménagée à proximité de l'entrée de ladite chemise et contre laquelle s'appuie la face externe du piston d'équilibre, sous la poussée du ressort 51.

Le montage du distributeur hydraulique dans un alésage borgne et le maintien de l'organe mobile dudit distributeur au moyen d'un circlips positionné à l'entrée de la chemise fixe de ce dernier, permettent d'obtenir une très bonne étanchéité et facilitent grandement l'execution du logement dudit distributeur et la mise en place de ses organes constitutifs.

Sur la partie postérieure du corps 31, est articulé le levier de manœuvre 57 du sécateur prenant appui contre l'extremite externe de la gâchette 54.

On décrit ci-après le mode d'utilisation et le fonctionnement du sécateur qui vient d'être décrit.

Le sécateur est d'abord préparé pour pouvoir fonctionner. Dans ce but, la chambre c est remplie d'un fluide gazeux comprimé, par l'intermédiaire de la valve 42 et à l'aide de tout matériel adéquat, ce qui a pour effet de maintenir ou de repousser le piston libre 41 dans le fond de l'alésage de la tige de piston 38, l'orifice de purge 48 étant ouvert pour l'évacuation de l'air se trouvant dans la chambre d. Le sécateur étant branché à la source de fluide hydraulique sous pression, le fluide hydraulique sous pression tel qu'huile est ensuite envoyé, en agissant sur le distributeur, contre la face de travail du piston d'entraînement 39 qui se trouve repoussé vers l'avant en même temps que la tige 38 et le clapet 45 disposé à l'avant dudit piston. En fin de course, la butée 47 provoque le soulèvement du clapet 45. Compte tenu de l'ouverture des perçages radiaux h, le clapet anti-retour 43 est décollé de son siège et l'huile pénètre dans les chambres b et d qui présentent leur volume minimum. Ces chambres se remplissent d'huile laquelle chasse l'air qui s'y trouve. Lorsque l'huile sort de l'orifice de purge 48, ce dernier est obturé à l'aide de son obturateur étanche. La pression qui est alors créée dans les chambres b et d a pour effet de repousser le piston libre 41 vers l'avant, en augmentant le volume de la chambre d et en soumettant le gaz comprimé renfermé dans la chambre c dont le volume diminue, à une compression supplémentaire. Lorsque cette compression s'équilibre avec la pression du fluide hydraulique sous pression, le piston libre s'immobilise et le clapet 43 obture l'orifice g d'entrée dudit fluide hydraulique dans l'enceinte constituée par les chambres b et d, et l'orifice e faisant communiquer ces dernières.

Le sécateur est alors prêt à fonctionner et, comme on le décrit en détail ci-après, en relâchant le levier de manœuvre 57, on obtient le retour vers l'arrière des deux pistons et l'ouverture des lames. En position de repos correspondant à l'ouverture des lames (figures 9 à 11), le fluide hydraulique sous pression provenant de l'arrivée j, remplit la chambre annulaire p, par l'intermédiaire du passage n-l, mais la position du tiroir de distribution 52 interdit toute communication :

d'une part, avec la chambre a délimitée par la face de travail du piston d'entraînement 39 ;

d'autre part, avec le retour k (fonctionnement en circuit hydraulique à centre fermé).

En outre, la chambre a communique avec le retour par le passage i-m-o-q et le fond de l'évidement 49.

Lorsqu'on repousse l'organe mobile 52-53-54 du distributeur, au moyen du levier 57 appuyant sur la gâchette 54, à l'encontre de l'action antagoniste du ressort 51, la nouvelle position du tiroir de distribution 52 :

permet l'arrivée de l'huile sous pression dans la chambre a par le passage l-n-p-o-m-i ;

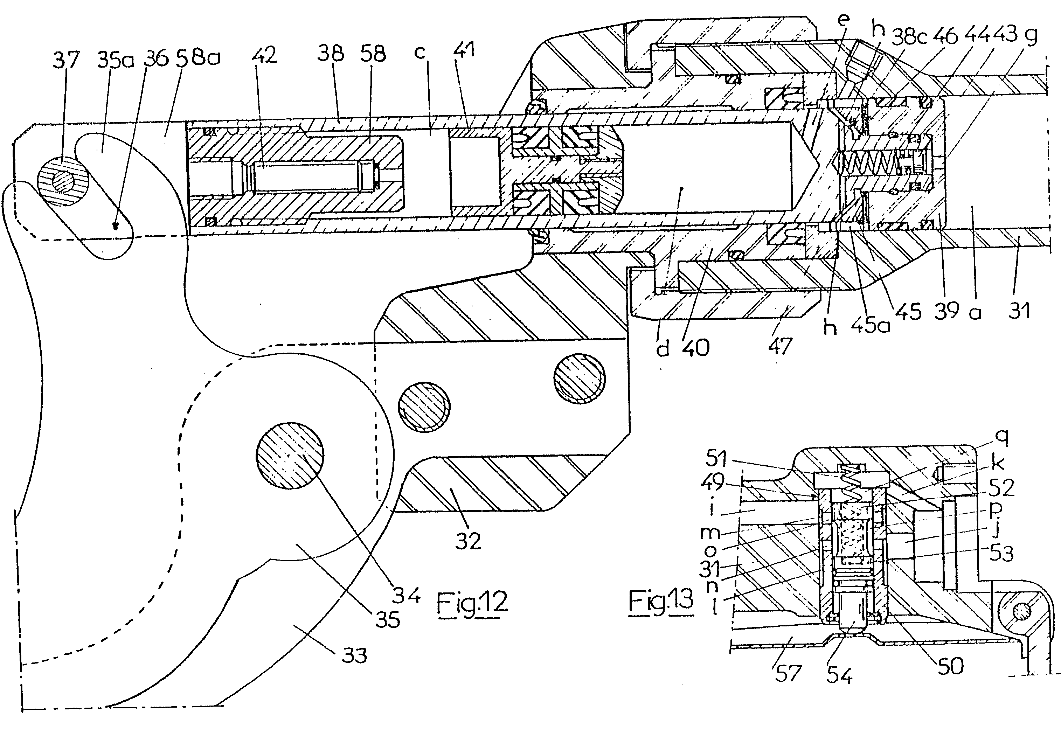

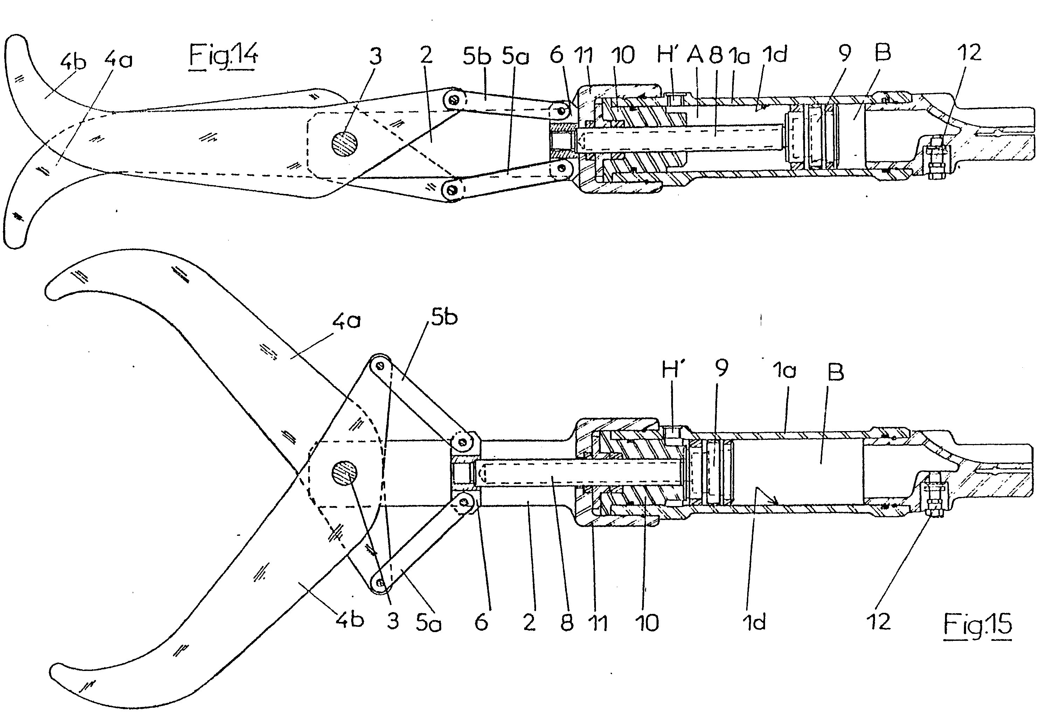

interrompt la communication entre la chambre a et le retour k. L'arrivée de l'huile sous pression dans la chambre a provoque le déplacement vers l'avant du piston d'entraînement 39 et de la tige de piston 38, ce qui entraîne le pivotement de la lame mobile 35 dans la position de fermeture des lames correspondant à l'action de coupe du sécateur (figures 12 et 13). Le déplacement du piston d'entraînement vers l'avant a pour conséquence d'appliquer une pression sur l'huile contenue dans les chambres b et d communiquant par l'intermédiaire de l'orifice e, lesdites chambres présentant, avant ce déplacement, leurs volumes maximum et minimum, respectivement. Cette pression est répercutée sur la face arrière du piston libre 41 qui se trouve repoussé vers l'avant en appliquant une compression supplémentaire au gaz compressible et comprimé renfermé dans la chambre c.

Comme indiqué précédemment, le clapet 45 est soulevé de son siège, à l'encontre de l'action antagoniste de la rondelle Belleville 46, lorsqu'il rencontre la butée 47. De la sorte, les très légères fuites d'huile inévitables dans tout système de vérin sont automatiquement compensées par l'entrée, dans les chambres b et d, d'une quantité correspondante d'huile provenant de la chambre a, à travers le passage g-f-h. En effet, quand le volume d'huile contenu dans les chambres b et d diminue, la pression s'exerçant sur la face postérieure du clapet anti-retour 43 permet de le décoller de son siège lorsque le clapet 45 est soulevé du sien, ce qui autorise l'entrée d'une quantité compensatrice d'huile dans lesdites chambres, jusqu'à ce que les pressions s'équilibrent dans lesdites chambres et dans la chambre c. De la sorte, le volume d'huile contenu dans les chambre b et d est toujours constant.

Lorsqu'on relâche le levier 57, l'organe mobile 52-53-54 du distributeur est repoussé par le ressort 51 et le tiroir de distribution 52 revient à sa position précédente suivant laquelle :

il interrompt la communication entre l'arrivée j et la chambre a ;

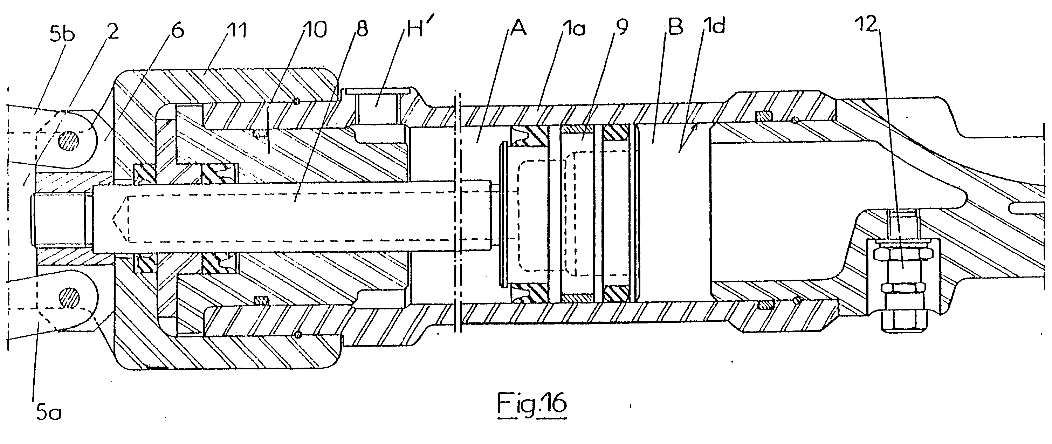

il rétablit la communication entre la chambre a et le retour k, par le passage i-m-o-q et le fond de l'évidement 49. Par suite de la disparition de la pression d'arrivée sur la face de travail du piston d'entraînement 39, le gaz comprimé contenu dans le chambre c peut se décomprimer et cette décompression a pour effet de repousser le piston libre 41 vers l'arrière. En reculant, ce dernier refoule l'huile contenue dans la chambre d, cette huile passant dans la chambre annulaire b en provoquant le recul du piston 39 et de la tige 38, ce qui entraîne le pivotement de la lame mobile 35 dans la position d'ouverture (figure 9 à 11). On a représenté, aux figures 14 à 16 un autre mode d'exécution de l'outil de coupe proprement dit d'un sécateur de type analogue à celui qui est illustré aux figures 1 à 8.

Pour cette raison, les organes de cet outil de coupe identiques ou remplissant les mêmes fonctions que ceux de l'outil de coupe du sécateur illustré aux figures 1, 2, 3 et 5, sont désignés par les mêmes références. D'autre part, dans un but de concision, le distributeur hydraulique logé dans la poignée de manœuvre, le tuyau de jonction et le tube allongé reliant, respectivement, ledit distributeur et ladite poignée, à l'outil de coupe, ne sont pas représentés.

Ce mode d'exécution simplifié et économique diffère de celui qui est illustré aux figures 1 à 8, principalement par le fait que la chambre de rappel B renfermant ou apte à renfermer le fluide gazeux comprimé, est délimitée par la grande face du piston d'entraînement 9 et est disposée dans la partie arrière du boîtier avant 1a, tandis que la chambre hydraulique de pression A est délimitée par la petite face de travail dudit piston et disposée autour de la tige 8, dans la partie avant dudit boîtier. La valve 12 permettant d'introduire le fluide gazeux comprimé dans la chambre de rappel B est donc installée dans un logement ménagé dans la partie arrière du boîtier 1a et débouchant dans ladite chambre, tandis que l'orifice H' d'entrée du fluide hydraulique dans la chambre de pression A est exécutée dans la partie avant dudit boîtier.

Grâce à une telle construction, on obtient une meilleure étanchéité au fluide gazeux comprimé contenu dans la chambre de rappel B laquelle est obturée, de manière étanche, dans sa partie arrière, au moyen de la valve 12.

## Revendications

1. Outil hydraulique portatif, par exemple sécateur hydraulique destiné aux travaux de taille ou de récolte en agriculture, arboriculture, viticulture ou horticulture, comportant un vérin à simple effet comprenant : un piston d'entraînement (9, 39) logé avec une aptitude de coulissement étanche dans l'alésage d'un corps évidé (1, 31) et dont la course active s'effectue sous la poussée d'un fluide hydraulique sous pression s'appliquant sur la face de travail dudit piston, une tige de piston (8, 38) assujettie à au moins un organe mobile (4a, 4b ; 35) desdits outils, et une chambre de rappel (B, c) de volume variable et dont le volume décroît lorsque le piston d'entraînement se déplace sous la poussée du fluide hydraulique sous pression, caractérisé en ce que ladite chambre de rappel (B, c) est étanche ou équipée d'un moyen de fermeture étanche (10, 12, 52-48) et renferme ou est apte à renfermer un fluide compressible comprimé, de préférence un fluide gazeux comprimé, de sorte que lorsque le piston d'entraînement (9, 39) s'est déplacé sous la poussée du fluide hydraulique sous pression, la détente de ce fluide gazeux comprimé provoque automatiquement le retour dudit piston, lorsque la poussée exercée par ledit fluide hydraulique sur la face de travail de ce dernier devient inférieure à celle dudit fluide gazeux comprimé.

2. Outil hydraulique portatif selon la revendication 1, caractérisé en ce que la chambre de rappel (B) est disposée autour de la tige de piston (8), formant une chambre de rappel annulaire.

3. Outil hydraulique portatif suivant la revendication 2, caractérisé en ce qu'une chambre-réservoir (C) est ménagée à l'intérieur de la tige de piston (8), cette chambre communiquant avec la chambre de rappel annulaire (B), par exemple par l'intermédiaire d'au moins un trou radial (D).

4. Outil hydraulique portatif selon la revendication 1, caractérisé en ce que la chambre de rappel (B) est délimitée par la grande face du piston d'entraînement (9) tandis que la chambre hydraulique de pression (A) est disposée autour de la tige (8) dudit piston et délimitée par la petite face de travail de ce dernier.

5. Outil hydraulique portatif selon la revendication 1, caractérisé en ce qu'il comporte une enceinte étanche (b, d, e) renfermant ou apte à renfermer un volume constant d'un fluide de transmission incompressible tel que, par exemple, de l'huile, cette enceinte étant délimitée, d'une part, par la face du piston d'entraînement (39) opposée à sa face de travail sur laquelle s'applique la poussée du fluide hydraulique provenant de la source de fluide sous pression et, d'autre part, par l'une des faces d'un piston libre (41) délimitant, par sa face opposée, la chambre de rappel (c) contenant le fluide compressible comprimé et constitué par l'alésage dans lequel peut coulisser, de manière étanche, ledit piston libre.

6. Outil hydraulique portatif suivant la revendication 5, caractérisé en ce que la chambre de rappel (c) délimitée par l'une des faces du piston libre (41) est constituée par un alésage de la tige (38) du piston d'entraînement (39), tandis que l'enceinte étanche renfermant ou apte à renfermer le fluide incompressible de transmission comprend : — une chambre annulaire (b) ménagée autour de la tige (38), une chambre (d) délimitée par la face opposée dudit piston libre et par l'alésage de ladite tige dans lequel se déplace ce dernier, et au moins un orifice (e) établissant une communication constante entre lesdites chambres (b, d).

7. Outil hydraulique portatif selon l'une quelconque des revendications 4 à 6, caractérisé en ce qu'il comporte des moyens permettant l'introduction automatique, en cours de fonctionnement desdits outils, de quantités compensatrices de fluide de transmission dans l'enceinte renfermant le fluide incompressible de transmission, lorsque le volume de ce dernier diminue dans ladite enceinte.

8. Outil hydraulique portatif suivant la revendication 7 et l'une des revendications 5 ou 6, caractérisé en ce que les moyens permettant l'introduction automatique de quantités compensatrices de fluide de transmission comprennent un orifice (g) ménagé dans le piston d'entraînement (39) et servant de siège à un clapet anti-retour (43) assujetti à l'action d'un ressort de compression (44) tendant à l'appliquer sur son siège et installé dans un alésage (f) menagé dans l'extrémité postérieure de la tige d'entraînement (38), ledit alésage communiquant avec des perçages radiaux (h) débouchant dans la surface latérale d'une portion tronconique (38c) que présente ladite tige (38) à proximité et en avant dudit piston d'entraînement (39), cette surface conique servant de siège à un clapet annulaire (45) présentant une surface d'appui conique complémentaire, ce clapet annulaire étant maintenu sur son siège par un moyen élastique constitué, de préférence, par une rondelle Belleville (46) interposée entre sa face postérieure et la face avant du piston d'entraînement (39), une butée (47) étant installée fixement à l'extrémité avant de la chambre annulaire (b) afin de soulever le clapet annulaire (45) de son siège, lorsque ledit piston d'entraînement arrive en fin de course d'avancement.

9. Outil hydraulique portatif suivant l'une des revendications 7 ou 8, caractérisé en ce qu'il comporte un orifice de purge (48) muni d'un obturateur étanche, ledit orifice débouchant dans l'enceinte (b) contenant le fluide incompressible de transmission, de préférence à l'extrémité avant de cette dernière.

10. Outil hydraulique portatif selon la revendication 1, tel que sécateur hydraulique destiné aux travaux de taille ou de récolte en agriculture, arboriculture, viticulture ou horticulture, comportant un corps (1) à la partie avant (1a) duquel est installé une tête de coupe comportant deux lames pivotantes (4a, 4b) portées par un axe (3) constitué par un boulon et assujetties à la tige (8) du piston d'entraînement (9), caractérisé en ce qu'une butée à billes (29a, 29b) est installée sur ledit axe, de chaque côté du couple de lames, et en ce que la pression tendant à plaquer les lames l'une contre l'autre est appliquée à ces dernières par l'intermédiaire d'un organe élastique formé, de préférence, par une rondelle Belleville disposée sur la tige du boulon (3) et interposée, par exemple, entre la face interne de l'écrou (3a) dudit boulon et une bague (59) montée avec une aptitude de translation axiale sur ladite tige du boulon et placée en appui contre l'une des butées à billes.

11. Outil hydraulique portatif selon la revendication 1, tel que sécateur hydraulique destiné aux travaux de taille ou de récolte en agriculture, arboriculture, viticulture ou horticulture, comportant un corps (31) à la partie avant duquel est installée une tête de coupe comportant deux lames (33, 35) dont une lame pivotante (35) assujettie cinématiquement à la tige (38) du piston d'entraînement (39), caractérisé en ce que ladite lame pivotante comporte une fente ouverte (36) traversée par un coulisseau d'entraînement (37) porté par l'extrémité antérieure de ladite tige (38).

12. Outil hydraulique portatif suivant la revendication 1, à fonctionnement en circuit hydraulique à centre fermé, comprenant un distributeur à simple effet installé dans la partie postérieure du corps (31) et comportant une chemise fixe (50) munie de gorges périphériques et de trous radiaux pour la circulation du fluide hydraulique, et un organe mobile de distribution (52, 53, 54) logé avec une aptitude de coulissement dans ladite chemise, caractérisé en ce que ledit distributeur hydraulique est installé dans un évidement transversal borgne (49) dudit corps.

13. Outil hydraulique portatif selon la revendication 1, à fonctionnement en circuit hydraulique à centre ouvert, équipé d'un distributeur à simple effet installé dans la partie postérieure (1a) du corps (1) et comportant une chemise fixe (16) munie de gorges périphériques et de trous radiaux pour la circulation du fluide hydraulique, et un organe mobile de distribution comprenant successivement une gâchette (24), un obturateur cylindrique (21) muni d'un joint périphérique annulaire (22) d'étanchéité, un tiroir de distribution (17) et un piston d'équilibre (18) pourvu d'un joint périphérique annulaire (19) d'étanchéité, caractérisé en ce que le tiroir de distribution (17) et le piston d'équilibre (18) délimitent une chambre de distribution (N) en communication constante avec l'arrivée (E) du fluide hydraulique provenant de la source de fluide hydraulique et avec la chambre (A) délimitée par la face de travail du piston d'entraînement (9), ladite chambre de distribution pouvant être mise ou non en communication avec le retour (F) au moyen du tiroir de distribution (17), ledit tiroir de distribution délimitant, avec l'obturateur cylindrique (21), une chambre d'évacuation (O) se trouvant en relation constante avec le retour (F), par l'intermédiaire d'au moins un orifice radial (M) ménagé dans ladite chemise (16) ; et en ce que le piston d'équilibre (18) comporte une gorge annulaire périphérique (18b) disposée entre sa face interne et son joint annulaire d'étanchéité (19), ladite gorge communiquant avec la chambre d'évacuation (O) par l'intermédiaire d'un canal axial (P) ménagé dans ledit organe mobile du distributeur, d'au moins un orifice radial (Q) reliant ce canal axial et ladite gorge périphérique (18b), et d'au moins un orifice radial (R) reliant ledit canal axial et ladite chambre d'évacuation.

14. Outil hydraulique portatif suivant l'une quelconque des revendications 1, 12 ou 13, comprenant un distributeur installé dans un évidement transversal ménagé dans la partie postérieure du corps (1, 31) et comportant une chemise fixe (16, 50) munie de gorges périphériques et de trous radiaux pour la circulation du fluide hydraulique, et un organe mobile de distribution (18-17-21-24 ; 52-53-54) logé avec une aptitude de coulissement dans ladite chemise, caractérisé en ce que ledit organe mobile (18-17-21-24 ; 52-53-54) est maintenu dans la chemise fixe (16, 50) au moyen d'un circlips (23, 56) positionné dans une rainure circulaire interne ménagée à proximité de l'entrée de ladite chemise.

15. Procédé de rappel du piston des vérins à simple effet des outils hydrauliques portatifs tels que, par exemple, les sécateurs hydrauliques destinés aux travaux de taille ou de récolte en agriculture, arboriculture, viticulture ou horticulture, comportant un vérin à simple effet comprenant : un piston d'entraînement (9, 39) logé avec une latitude de coulissement étanche dans l'alésage d'un corps évidé (1, 31) et dont la course active s'effectue sous la poussée d'un fluide hydraulique sous pression s'appliquant sur la face de travail dudit piston, — une tige de piston (8, 38) assujettie cinématiquement à au moins un organe mobile (4a, 4b ; 35) desdits outils, — et une chambre de rappel (B, c) de volume variable et dont le volume décroît lorsque le piston se déplace sous la poussée du fluide hydraulique sous pression, caractérisé en ce que le rappel dudit piston s'effectue sous la poussée d'un fluide compressible tel que, par exemple, un fluide gazeux, comprimé et renfermé dans ladite chambre de rappel à volume variable (B, c), rendue étanche, ledit fluide étant soumis à une compression supplémentaire lors du déplacement dudit piston d'entraînement sous la poussée du fluide hydraulique sous pression provenant de la source de fluide hydraulique sous pression.

16. Procédé selon la revendication 15, caractérisé en ce que la poussée de rappel résultant de la détente du fluide compressible est transmise au piston d'entraînement (39), par l'intermédiaire d'un fluide incompressible.

**Claims**

1. Portable hydraulic tool, for example hydraulic secateurs for operations of cutting or harvesting in agriculture, arboriculture, viticulture or horticulture, having a single acting ram comprising : a driving piston (9, 39) disposed with a possibility of fluid tight sliding in the bore of a hollowed body (1, 31) and the active stroke of which takes place under the thrust of a hydraulic fluid under pressure acting on the working face of the said piston, a piston rod (8, 38) connected to at least one movable member (4a, 4b ; 35) of the said tools, and a return chamber (B, c) of variable volume and the volume of which decreases when the driving piston is displaced under the thrust of the hydraulic fluid under pressure, characterised in that the said return chamber (B, c) is fluid tight or equipped with a fluid tight closure means (10, 12, 52-48) and encloses or is adapted to enclose a compressed compressible fluid, preferably a compressed gaseous fluid, such that when the driving piston (9, 39) is displaced under the thrust of the hydraulic fluid under pressure, the expansion of this compressed gaseous fluid automatically causes the return of the said piston, when the thrust exerted by the said hydraulic fluid on the working face of this latter becomes less than that of the said compressed gaseous fluid.

2. Portable hydraulic tool, according to claim 1, characterised in that the return chamber (B) is disposed about the piston rod (8), forming an annular return chamber.

3. Portable hydraulic tool according to claim 2 characterised in that a reservoir chamber (C) is provided at the interior of the piston rod (8), this chamber communicating with the annular return chamber (B), for example by means of at least one radial hole (D).

4. Portable hydraulic tool according to claim 1 characterised in that the return chamber (B) is bounded by the large face of the driving piston (9) whilst the hydraulic pressure chamber (A) is disposed about the rod (8) of the said piston and is bounded by the small working face of this latter.

5. Portable hydraulic tool according to claim 1 characterised in that it comprises a fluid tight enclosure (b, d, e) enclosing or adapted to enclose a constant volume of an incompressible transmission fluid such as, for example, oil, this enclosure being bounded on the one hand by the face of the driving piston (39) opposite to its working face on which is applied the thrust of the hydraulic fluid coming from the source of fluid under pressure and, on the other hand, by one of the faces of a free piston (41) bounding, by its opposite face, the return chamber (c) containing the compressed compressible fluid and constituted by the bore in which can slide, in fluid tight manner, the said free piston.

6. Portable hydraulic tool, according to claim 5, characterised in that the return chamber (c) bounded by one of the faces of the free piston (41) is constituted by a bore of the rod (38) of the driving piston (39), whilst the fluid tight enclosure enclosing or adapted to enclose the incompressible transmission fluid comprises : an annular chamber (b) provided about the rod (38) a chamber (d) bounded by the opposite face of the said free piston and by the bore of the said rod in which this latter moves, and at least one orifice (e) establishing a constant communication between the said chambers (b, d).

7. Portable hydraulic tool according to any one of claims 4 to 6 characterised in that it comprises means permitting the automatic introduction, in the course of operation of the said tools, of compensating quantities of transmission fluid into the enclosure enclosing the incompressible transmission fluid, when the volume of this latter diminishes in the said enclosure.

8. Portable hydraulic tool, according to claim 7 and one of claims 5 or 6, characterised in that the means permitting the automatic introduction of compensating quantities of transmission fluid comprise an orifice (g) provided in the driving piston (39) and serving as a seat for a non-return valve (43) subjected to the action of a compression spring (44) tending to press it on its seat and installed in a bore (f) formed in the rear end of the driving rod (38), the said bore communicating with radial openings (h) opening in the lateral surface of a frusto-conical portion (38c) of the said rod (38) in proximity to and in front of the said driving piston (39), this conical surface serving as a seating for an annular valve (45) having a complementary conical bearing surface, this annular valve being maintained on its seat by a resilient means constituted, preferably, by a Belleville washer (46) interposed between its rear face and the forward face of the driving piston (39). a stop (47) being disposed fixedly at the forward end of the annular chamber (b) in order to lift the annular valve (45) from its seat, when the said driving piston arrives at the end of its advancing stroke.

9. Portable hydraulic tool according to one of claims 7 or 8 characterised in that it comprises a purging orifice (48) provided with a fluid tight closure, the said orifice opening into the enclosure (b) containing the incompressible transmission fluid, preferably at the forward end of this latter.

10. Portable hydraulic tools, according to claim 1, such as hydraulic secateurs for operations of cutting or harvesting in agriculture, arboriculture, viticulture or horticulture, comprising a body (1) at the forward part (1a) of which is installed a cutting head comprising two pivoting blades (4a, 4b) carried by an axle (3) constituted by a bolt and coupled to the rod (8) of the driving piston (9) characterised in that a ball thrust member (29a, 29b) is installed on the said axle, at each side of the pair of blades, and in that the pressure tending to press the blades one against the other is applied to these latter by means of a resilient member formed, preferably, by a Belleville washer disposed on the rod of the bolt (3) and interposed, for example, between the internal face of the nut (3a) of the said bolt and a ring (59) mounted, with a capability of axial translation, on the said rod on the bolt and placed in contact against one of the ball thrust members.

11. Portable hydraulic tool, according to claim 1, such as hydraulic secateurs for operations of cutting or harvesting in agriculture, arboriculture, viticulture or horticulture, comprising a body (31) at the forward part of which is installed a cutting head comprising two blades (33, 35) one pivoting blade (35) of which is coupled kinematically to the rod (38) of the driving piston (39), characterised in that the said pivoting blade comprises an open recess (36) traversed by a driving slide (37) carried by the front end of the said rod (38).

12. Portable hydraulic tools according to claim 1, for operation in hydraulic circuit with closed centre, comprising a single acting distributor installed in the rear part of the body (31) and comprising a fixed sleeve (50) provided with peripheral throats and radial holes for the circulation of the hydraulic fluid, and a movable distribution member (52, 53, 54) disposed, with a capability of sliding in the said sleeve, characterised in that the said hydraulic distributor is installed in a blind transverse recess (49) of the said body.

13. Portable hydraulic tool according to claim 1, for operation in hydraulic circuit with open centre, provided with a single acting distributor installed in the rear part (1a) of the body (1) and comprising a fixed sleeve (16) provided with peripheral throats and radial holes for the circulation of hydraulic fluid, and a movable distribution member comprising successively a trigger portion (24), a cylindrical closure (21) provided with an annular peripheral sealing joint (22), a distribution handle (17) and a balancing piston (18) provided with an annular peripheral sealing joint (19), characterised in that the distribution handle (17) and the balancing piston (18) bound a distribution chamber (N) in constant communication with the inlet (E) of the hydraulic fluid coming from the source of hydraulic fluid and with the chamber (A) bounded by the working face of the driving piston (9), the said distribution chamber being capable of being placed, or not, in communication with the return (F) by means of the distribution handle (17), the said distribution handle bounding, with the cylindrical closure (21) an evacuation chamber (O) in constant relation with the return (F), by means of at least one radial orifice (M) formed in the said sleeve (16) ; and in that the balancing piston (18) comprises an annular peripheral throat (18b) disposed between its internal face and its annular sealing joint (19), the said throat communicating with the evacuation chamber (O) by means of an axial channel (P) provided in the said movable member of the distributor, at least one radial orifice (Q) coupling this axial channel and the said peripheral throat (18b), and at least one radial orifice (R) coupling the said axial channel and the said evacuation chamber.

14. Portable hydraulic tool according to any one of claims 1, 12 or 13, comprising a distributor installed in a transverse recess formed in the rear part of the body (1, 31) and comprising a fixed sleeve (16, 50) provided with peripheral throats and radial holes for the circulation of the hydraulic fluid, and a movable distribution member (18-17-21-24 ; 52-53-54) disposed, with a capability of sliding in the said sleeve ; characterised in that the said movable member (18-17-21-24 ; 52-53-54) is retained in the fixed sleeve (16, 50) by means of a circlip (23, 56) positioned in an internal circular groove formed near to the inlet of the said sleeve.

15. Process for the return of the piston of single acting rams of portable hydraulic tools such as for example hydraulic secateurs for operations of cutting or harvesting in agriculture, arboriculture, viticulture or horticulture, having a single acting ram comprising : a driving piston (9, 39) disposed, with a capability of sliding in fluid tight manner in the bore of a hollow body (1, 31) and the working stroke of which occurs under the thrust of a hydraulic fluid under pressure pressing on the working face of the said piston : a piston rod (8, 38) coupled kinematically to at least one movable element (4a, 4b ; 35) of the said tools and a return chamber (B, c) of variable volume and of which the volume decreases when the piston moves under the thrust of the hydraulic fluid under pressure, characterised in that the return of the said piston takes place under the thrust of a compressible fluid such as, for example, a gaseous fluid, compressed and enclosed in the said return chamber (B, c) of variable volume, made fluid tight, the said fluid being subjected to a supplementary compression during the displacement of the said driving piston under the thrust of the hydraulic fluid under pressure coming from the source of hydraulic fluid under pressure.

16. Process according to claim 15 characterised in that the return thrust resulting from the expansion of the compressible fluid is transmitted to the driving piston (39) by means of an incompressible fluid.

**Patentansprüche**

1. Tragbares hydraulisches Werkzeug, zum Beispiel hydraulische Baumschere für Schnitt- oder Erntearbeiten in der Landwirtschaft, im Obst-, Wein- oder Gartenbau, das einen einfach wirkenden Zylinder besitzt, bestehend aus : einem Mitnehmerkolben (9, 39), der dichtschließend gleitbar in der Bohrung eines hohlen Körpers (1, 31) sitzt, und dessen Arbeitsgang durch die Schubwirkung einer Hydraulik-Druckflüssigkeit erfolgt, die auf die Arbeitsseite des besagten Kolbens einwirkt, einer Kolbenstange (8, 38), die mindestens an einem beweglichen Organ (4a, 4b ; 35) der besagten Werkzeuge befestigt ist, und einer Rückzugkammer (B, c) mit variablem Volumen und dessen Volumen abnimmt, wenn der Mitnehmerkolben sich unter der Schubwirkung der unter Druck stehenden Hydraulik-Druckflüssigkeit verschiebt, dadurch gekennzeichnet, daß die besagte Rückzugkammer (B, c) abgedichtet oder mit einem dichtschließenden Verschlußmittel (10, 12, 52-48) ausgestattet ist, und ein kompressibles Druckfluid, vorzugsweise ein gasförmiges Druckfluid enthält oder enthalten kann, so daß, wenn sich der Mitnehmerkolben (9, 39) unter der Schubwirkung der Hydraulik-Druckflüssigkeit verschoben hat, die Druckminderung dieses gasförmigen Druckfluids automatisch den Rückzug des besagten Kolbens hervorruft, wenn der durch die besagte Hydraulikflüssigkeit auf die Arbeitsseite dieses letzteren ausgeübte Schub geringer wird als der des besagten gasförmigen Druckfluids.

2. Tragbares hydraulisches Werkzeug nach Anspruch 1, dadurch gekennzeichnet, daß die Rückzugkammer (B) um die Kolbenstange (8) herum angeordnet ist, wobei sie eine ringförmige Rückzugkammer bildet.

3. Tragbares hydraulisches Werkzeug nach Anspruch 2, dadurch gekennzeichnet, daß eine Speicherkammer (C) im Inneren der Kolbenstange (8) ausgespart ist, wobei diese Kammer mit der ringförmigen Rückzugkammer (B), zum Beispiel über mindestens ein radiales Loch (D), in Verbindung steht.

4. Tragbares hydraulisches Werkzeug nach Anspruch 1, dadurch gekennzeichnet, daß die Rückzugkammer (B) durch die große Fläche des Mitnehmerkolbens (9) begrenzt wird, während die Hydraulik-Druckkammer (A) um die Stange (8) des besagten Kolbens herum angeordnet ist und durch die kleine Arbeitsseite dieses letzteren begrenzt wird.

5. Tragbares hydraulisches Werkzeug nach Anspruch 1, dadurch gekennzeichnet, daß es eine dichtschließende Einfassung (b, d, e) besitzt, die ein konstantes Volumen einer unverdichtbaren Arbeitsmittel wie zum Beispiel Öl einschließt oder einschließen kann, wobei diese Einfassung einerseits durch die seiner Arbeitsseite gegenüberliegende Seite des Mitnehmerkolbens (39), auf welche sich der von der Druckflüssigkeitsquelle herkommende Schub der Hydraulikflüssigkeit auswirkt, und andererseits durch eine der Seiten eines freifliegenden Kolbens (41) begrenzt wird, der durch seine gegenüberliegende Seite die Rückzugkammer (c) begrenzt, welche das kompressible Druckfluid enthält und durch die Bohrung gebildet wird, in welcher der besagte freifliegende Kolben dichtschließend gleiten kann.

6. Tragbares hydraulisches Werkzeug nach Anspruch 5, dadurch gekennzeichnet, daß die durch eine der Seiten des freifliegenden Kolbens (41) begrenzte Rückzugkammer (c) aus einer Bohrung der Stange (38) des Mitnehmerkolbens (39) besteht, während die dichtschließende Einfassung, welche die nicht verdichtbaren Arbeitsmittel einschließt oder einschließen kann, folgendes umfaßt : — eine rund um die Stange (38) ausgesparte, ringförmige Kammer (b), eine Kammer (d), begrenzt durch die dem besagten freifliegenden Kolben gegenüberliegende Seite und durch die Bohrung der besagten Stange, in welcher sich dieser letztere verschiebt, und mindestens eine Öffnung (e), welche eine ständige Verbindung zwischen den besagten Kammern (b, d) herstellt.

7. Tragbares hydraulisches Werkzeug nach einem der Ansprüche 4 bis 6, dadurch gekennzeichnet, daß es Mittel besitzt, welche die automatische Zufuhr, während des Betriebs der besagten Werkzeuge, von Ausgleichsmengen von Arbeitsmitteln in die das nicht verdichtbare Arbeitsmittel umgebende Einfassung ermöglicht, während sich das Volumen dieser letzteren in der besagten Einfassung vermindert.

8. Tragbares hydraulisches Werkzeug nach Anspruch 7 und einem der Ansprüche 5 oder 6, dadurch gekennzeichnet, daß die die automatische Zufuhr von Ausgleichsmengen von Arbeitsmitteln ermöglichenden Mittel eine in dem Mitnehmerkolben (39) ausgesparte Öffnung (g) enthalten und als Sitz für ein Rückschlagventil (43) dienen, das von der Aktion einer Druckfeder (44) abhängt, die dazu neigt, sie an ihren Sitz zu drücken und in einer am hinteren Ende der Mitnehmerstange (38) ausgesparten Bohrung (f) angebracht ist, wobei die besagte Bohrung mit den radialen Durchbohrungen (h) in Verbindung steht, welche an der Seitenfläche eines kegelstumpfartigen Abschnitts (38c) münden, welchen die besagte Stange (38) in der Nähe und am Vorderteil des besagten Mitnehmerkolbens (39) aufweist, wobei diese konische Fläche als Sitz für eine eine konische, komplementäre Auflagefläche aufweisende, ringförmige Klappe (45) dient, wobei diese ringförmige Klappe auf ihrem Sitz mit Hilfe eines elastichen Mittels gehalten wird, das vorzugsweise aus einem, zwischen ihrer Hinterseite und der Vorderseite des Mitnehmerkolbens (39) eingeschobenen Belleville-Dichtungsring (46) besteht, wobei an dem vorderen Ende der ringförmigen Kammer (b) ein Anschlag (47) fest montiert ist, um die ringförmige Klappe (45) von ihrem Sitz zu heben, wenn der besagte Mitnehmerkolben am Ende des Vorwärtshubs angekommen ist.

9. Tragbares hydraulisches Werkzeug nach einem der Ansprüche 7 oder 8, dadurch gekennzeichnet, daß es eine mit einem dichtschließenden Verschluß versehene Auslaßöffnung (48) besitzt, wobei die besagte Öffnung in der das nicht verdichtbare Arbeitsmittel enthaltenden Einfassung (b), vorzugsweise an dem vorderen Ende dieser letzteren, mündet.

10. Tragbares hydraulisches Werkzeug nach Anspruch 1, wie zum Beispiel hydraulische Baumschere für Schnitt oder Erntearbeiten in der Landwirtschaft, im Obst-, Wein- oder Gartenbau, bestehend aus einem Körper (1) an dessen Vorderteil (1a) ein zwei schwenkbare Schneiden (4a, 4b) aufweisender Schneidkopf angebracht ist, die von einer aus einem Bolzen bestehenden Achse (3) getragen werden und an der Stange (8) des Mitnehmerkolbens (9) befestigt sind, dadurch gekennzeichnet, daß auf besagter Achse ein Druckkugellager (29a, 29b) von beiden Seiten des Schneidenpaares befestigt ist, und daß der Druck, der dazu neigt, die Schneiden gegeneinander anzuschlagen auf diese letzteren mittels eines geformten elastischen Organs, vorzugsweise eines Bellville-Dichtungsrings ausgeübt wird, welcher auf dem Schaft des Bolzens (3) angeordnet und beispielsweise zwischen der Innenseite der Mutter (3a) des besagten Bolzens und einem auf dem besagten Bolzenschaft axial verschiebbaren und als Abstützung gegen eines der Druckkugellager angebrachten Ring (59) eingeschoben ist.

11. Tragbares hydraulisches Werkzeug nach Anspruch 1, wie zum Beispiel hydraulische Baumschere für Schnitt- oder Erntearbeiten in der Landwirtschaft, im Obst-, Wein- oder Gartenbau, bestehend aus einem Körper (31), an dessen Vorderteil ein zwei Schneiden (33, 35) besitzender Schneidkopf angebracht ist, wovon eine schwenkbar (35) kinematisch an der Stange (38) des Mitnehmerkolbens (39) befestigt ist, dadurch gekennzeichnet, daß die besagte schwenkbare Schneide einen offenen Schlitz (36) besitzt, der von einem von dem vorderen Ende der besagten Stange (38) getragenen Mitnehmerschieber (37) durchquert wird.

12. Tragbares hydraulisches Werkzeug nach Anspruch 1, als geschlossener Hydraulikkreis arbeitend, das einen im rückwärtigen Teil des Körpers (31) montierten, einfach wirkenden Verteiler aufweist und einen mit am Umfang verteilten Nuten und radialen Löchern für die Zirkulation der Hydraulikflüssigkeit versehenen, feststehenden Mantel (50), und ein in dem besagten Mantel gleitbar untergebrachtes, bewegliches Verteilerorgan (52, 53, 54) besitzt, dadurch gekennzeichnet, daß der besagte Hydraulikverteiler in einer querlaufenden, blinden Vertiefung (49) des besagten Körpers montiert ist.

13. Tragbares hydraulisches Werkzeug nach Anspruch 1, als offener Hydraulikkreis arbeitend, das mit einem im rückwärtigen Teil (1a) des Körpers (1) untergebrachten, einfach wirkenden Verteiler versehen ist und einen mit am Umfang verteilten Nuten und radialen Löchern für die Zirkulation der Hydraulikflüssigkeit versehenen, feststehenden Mantel (16) und ein bewegliches Verteilerorgan besitzt, das nacheinander einen Drücker (24), einen mit einer peripherischen, ringförmigen Dichtung (22) versehenen zylindrischen Verschluß (21), einen Steuerschieber (17) und einen mit einer peripherischen, ringförmigen Dichtung (19) versehenen Ausgleichskolben (18) aufweist, dadurch gekennzeichnet, daß der Steu-erschieber (17) und der Ausgleichskolben (18) eine in ständiger Verbindung mit der Zufuhr (E) der von der Quelle der Hydraulikflüssigkeit kommenden Hydraulikflüssigkeit und mit der durch die Arbeitsseite des Mitnehmerkolbens (9) begrenzten Kammer (A) stehenden Verteilerkammer (N) begrenzen, wobei die besagte Verteilerkammer je nach Bedarf mit dem Rückhub (F) mittels eines Steuerschiebers (17) in Verbindung gebracht werden kann, wobei der besagte Steuerschieber (17) mit dem zylindrischen Verschluß (21), eine Auslaßkammer (0) begrenzt, welche sich in ständiger Beziehung mit dem Rückhub (F) mit Hilfe von mindestens einer, in dem besagten Mantel (16) ausgesparten, radialen Öffnung (M) befindet ; und daß der Ausgleichskolben (18) eine peripherische Ringnut (18b) besitzt, welche zwischen seiner Innenseite und seinem Dichtungsring (19) angeordnet ist, wobei die besagte Nut mit der Auslaßkammer (0) über einen in dem besagten beweglichen Verteilerorgan ausgesparten, axialen Kanal (P), über mindestens eine radiale Öffnung (Q), welche diesen axialen Kanal und die besagte peripherische Ringnut (18b) verbindet, und über mindestens eine radiale Öffnung (R), die den besagten axialen Kanal und die besagte Auslaßkammer verbindet, in Verbindung steht.

14. Tragbares hydraulisches Werkzeug nach einem der Ansprüche 1, 12 oder 13, das einen in einer in dem rückwärtige Teil des Körpers (1, 31) ausgesparten querlaufenden Vertiefung angebrachten Verteiler aufweist und einen mit peripherischen Nuten und radialen Löchern für die Zirkulation der Hydraulikflüssigkeit versehenen, feststehenden Mantel (16, 50) und ein gleitbar in dem besagten Mantel untergebrachtes, bewegliches Verteilerorgan (18-17-21-24 ; 52-53-54) besitzt, dadurch gekennzeichnet, daß das besagte bewegliche Organ (18-17-21-24 ; 52-53-54) in dem feststehenden Mantel (16, 50) mit Hilfe einer Ringsicherung (23, 56) gehalten wird, die in einer in der Nähe der Eingangsöffnung des besagten Mantels ausgesparten, kreisrunden Innennut liegt.

15. Verfahren zum Zurückziehen der Kolben aus ihren einfach wirkenden Zylindern wie zum Beispiel von tragbaren hydraulischen Werkzeugen, wie hydraulischen Baumscheren für Schnitt- oder Erntearbeiten in der Landwirtschaft, im Obst-, Wein- oder Gartenbau, die einen einfach wirkenden Zylinder aufweisen, bestehend aus : einem Mitnehmerkolben (9, 39), der abgedichtet mit Gleitspielraum in der Bohrung eines hohlen Körpers (1, 31) sitzt, und dessen Arbeitsgang durch die Schubwirkung einer Hydraulik-Druckflüssigkeit erfolgt, die auf die Arbeitsseite des besagten Kolbens einwirkt, — einer Kolbenstange (8, 38), die kinematisch an mindestens einem beweglichen Organ (4a, 4b ; 35) der besagten Werkzeuge befestigt ist, — und einer Rückzugkammer (B, c) mit variablem Volumen und deren Volumen abnimmt, wenn sich der Mitnehmerkolben unter der Schubwirkung der unter Druck stehenden Hydraulik-Druckflüssigkeit verschiebt, dadurch gekennzeichnet, daß der Rückhub des besagten Kolbens unter der Schubwirkung eines kompressiblen Fluids wie zum Beispiel eines in der besagten, abgedichteten Rückzugkammer mit variablem Volumen (B, c) komprimierten und eingeschlossenen gasförmigen Fluids erfolgt, wobei das besagte Fluid während der Verschiebung des besagten Mitnehmerkolbens unter der Schubwirkung der von der Hydraulik-Druckflüssigkeitsquelle kom-menden Hydraulik-Druckflüssigkeit einem zusätz-lichen Druck ausgesetzt ist.

16. Verfahren nach Anspruch 15, dadurch gekennzeichnet, daß der sich aus der Druckminderung des kompressiblen Fluids ergebende Rückhub auf den Mitnehmerkolben (39) mittels eines nicht kompressiblen Fluids übertragen wird.

Fig.1

4a

3 4a' 5a    7 11 10 8 13 C 1d B 9 A 1c 15

4b' 5b 2   6 12   1a

Fig.2

0 109 912

Fig.3

Fig.4

Fig.5

Fig.6

Fig.7

Fig.8

35  35a 37 36 58a 32  38 40  c  b  41 e 45 39  i  49  52 50 k

58 42

33 34

31

57

54

a

g

0 109 912

Fig.9

Fig.10

Fig.11

0 109 912

Fig.12

Fig.13

0 109 912

Fig.14

Fig.15

Fig.16

0 109 912